# EUROPEAN PATENT APPLICATION

(11) **EP 4 801 192 A1**
(43) Date of publication of application: **02.09.2026**
(21) Application number: 26160810.3
(22) Date of filing: 25.02.2026
(51) Int. Cl.: H05B 3/84, H05B 1/02, B64C 1/14, B64D 15/12

(54) **OVERHEAT PROTECTION OF AIRCRAFT CABIN WINDOW ANTI-FOGGING/FROSTING MEASURES**

(30) Priority: 27.02.2025 US 202563764271 P
(71) Applicant: Bombardier Inc., Dorval QC H4S1Y9 (CA)
(72) Inventor: WANG, Hongzhi, Dollard-des-Ormeaux, H9G 1B8 (CA); MONFETTE, Stephane, Lachine, H8T 3N8 (CA); DOUCET, Jean-Philippe, Kirkland, H9J 3V9 (CA); NORMANDIN, Gaetan, Vaudreuil-Dorion, J7V 9X3 (CA)
(74) Representative: BCF Global

(57) **Abstract**

An aircraft anti-fogging/frosting structural cabin window assembly is presented that includes a structural cabin window containing a transparent area and a non-transparent area; an electrically-conductive transparent heating film (THF) component disposed along the transparent area of the structural cabin window, the THF component configured to generate thermal energy in response to a supplied electric voltage from an aircraft power source; and an electrically-conductive positive temperature coefficient (PTC) ink component disposed along the non-transparent area and electrically-connected in series to the THF component, in which the PTC ink component is configured with an electrical resistance that varies with ambient temperatures. And, in response to temperatures exceeding a threshold temperature value, the electrical resistance of PTC ink component increases to a level that substantially reduces the electrical power supplied to the THF component to prevent overheating of the structural cabin window by the THF component.

## Description

### CROSS-REFERENCE TO RELATED APPLICATIONS

The present application claims priority to U.S. Provisional Application No. 63/764,271, filed February 27, 2025, the entirety of which is incorporated herein by reference.

### FIELD OF TECHNOLOGY

The technology presented herein generally relates to aircraft cabin windows and, in particular, to an anti-fogging and anti-frosting cabin window measures.

### BACKGROUND

Part of the air travel experience includes the enjoyment of passengers observing views of the surrounding environment through cabin windows. However, at different altitudes, ambient temperatures may decline substantially leading to fogging and/or frosting issues on cabin window surfaces that obscure cabin window visibility.

Accordingly, in efforts to maintain adequate levels of visibility during colder ambient conditions, cabin windows have been equipped with an anti-fogging/frosting control system comprising a conductive transparent heating film (THF) layer. The THF component is disposed between the inner and outer planar surfaces of cabin windows and is generally arranged to span the visible or transparent area of the cabin window.

The THF layer comprises electrically-conductive, thermally-responsive materials, such as, for example, Gold film, Indium Tin Oxide (ITO), aluminum doped zinc oxide *etc.* having heat-generating properties in response to a supplied electrical power. The generated thermal energy operates to heat the inner and/or outer planar surfaces of the cabin window to maintain the cabin window surface temperature above the local dew point during colder ambient temperatures to minimize to prevent fogging/frosting issues.

However, in case of anti-fogging/frosting control system failure, the THF layer may continue to generate heat even during warm ambient conditions. The continued application of heat to cabin window surfaces during warm conditions may result in the overheating of cabin window materials which may compromise the integrity of the cabin windows and its capability to handle flight and pressurization loads.

As such, there is an interest in providing reliable overheating protection of anti-fogging/frosting measures for aircraft cabin windows.

### SUMMARY

Embodiments of the present technology have been developed based on the interest to provide reliable overheating protection of anti-fogging/frosting measures for aircraft cabin windows. To this end, an object of the present technology is directed to an aircraft anti-fogging and anti-frosting structural cabin window assembly including a structural cabin window containing a transparent viewing area and a non-transparent area; an electrically conductive transparent heating film (THF) component disposed along the transparent area of the structural cabin window, the THF component configured to generate thermal energy upon being activated due to low temperatures by receiving an electric voltage supplied by an aircraft electrical power source; and an electrically conductive positive temperature coefficient (PTC) component disposed along the non-transparent area and electrically-connected in series to the THF component for receiving the supplied electrical voltage, the PTC component configured with an electrical resistance that varies with sensed temperatures. In response to a temperature exceeding a high temperature threshold value (Tₛₑₜₚₒᵢₙₜ), the electrical resistance of the PTC component increases to a level that reduces electrical current supplied to the THF component to prevent overheating of the structural cabin window by the THF component.

In a related aspect, the present technology provides that the aircraft structural cabin window assembly, upon temperatures exceeding the high temperature threshold value Tₛₑₜₚₒᵢₙₜ, the variable electrical resistance of the PTC component is configured to increase at an exponential rate to minimize the electrical current flowing through the THF and PTC components.

In an additional aspect, the present technology provides that the THF component further comprises: a plurality of electrically conductive transparent heating elements arranged to span across the transparent viewing area; and a conductive THF busbar arranged along the non-transparent area and electrically coupled to the transparent heating elements and the aircraft power source for supplying electrical voltage to the transparent heating elements.

In another additional aspect, the present technology provides that the PTC component further comprises a plurality of electrically conductive PTC tiles arranged along the non-transparent area; an electrically conductive PTC busbar arranged along the non-transparent area and electrically coupled to the heating elements and electrically serially-connected to the conductive THF busbar for supplying electrical voltage to the PTC tiles.

In further additional aspect, the present technology provides that the configuration of the PTC component comprises one or more of setting the high temperature threshold Tₛₑₜₚₒᵢₙₜ at a value for which the PTC component variable resistance increases exponentially; setting a PTC component coverage area to span a maximal area of the nontransparent area; setting a PTC component resistance ratio to a maximal value; and setting a PTC component initial power density to a maximal value.

The exemplary implementations described by this disclosure are intended to aid the reader in understanding the principles and relevant concepts of the present technology. In no way, however, are the specifically-described implementations intended to limit the scope of the present technology.

Moreover, unless expressly provided otherwise, the words "first", "second", "third", *etc.* have been used as adjectives only for the purpose of allowing for distinction between the nouns that they modify from one another, and not for the purpose of describing any particular relationship between those nouns. It should also be understood that terms relating to the position and/or orientation of components such as "upper", "lower", "top", "bottom", "front", "rear", "left", "right", are used herein to simplify the description and are not intended to be limitative of the particular position/orientation of the components in use.

Furthermore, it should be understood that the use of the phrase "at least one of A and B" is intended to mean A only, B only, or both A and B.

Additional and/or alternative features, aspects and advantages of implementations of the present technology will become apparent from the following description, the accompanying drawings and the appended claims.

### BRIEF DESCRIPTION OF THE DRAWINGS

The drawings presented herewith are for illustrating various implementations of articles, products, methods, and apparatuses described in the present specification. It should be understood that, unless explicitly identified, the drawings should not be assumed to be to scale, as various features may be exaggerated, scaled down, or omitted for purposes of clarity. Accordingly:
FIG. 1 depicts a graph representing positive temperature coefficient (PTC) ink electrical resistance characteristics in response to temperature, in accordance with embodiments of the present technology;
FIG. 2A depicts a front view of cabin structural window assembly incorporating a positive temperature coefficient (PTC) ink component and a transparent heating film (THF) component, in accordance with embodiments of the present technology;
FIG. 2B depicts a cross-sectional view of the cabin structural window assembly depicted by FIG. 2A, in accordance with embodiments of the present technology; and
FIG. 3 depicts a schematic representation of the serial-connected PTC and THF components and corresponding parameters, in accordance with embodiments of the present technology.

### DETAILED DESCRIPTION

The examples and conditional language disclosed herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudocode, and the like represent various processes that may be substantially represented in non-transitory computer-readable media and so executed by a computer or processor, whether or not such computer or processor is explicitly shown.

Given this general understanding, the present technology, as described herein, is directed to an aircraft cabin window assembly incorporating PTC ink components, such as, PTC tiles, to provide overheating protection of anti-fogging/frosting measures provided by THF heat generating components.

By way of review, PTC ink components comprise electrically-conductive, non-transparent, carbon-based materials having a variable electrical resistance that may easily be applied to surfaces using printing techniques. As such, PTC ink components are capable of efficiently generating thermal energy across a temperature range in response to applied electrical power. For such reasons, PTC ink components have been implemented in a variety of opaque applications, such as, floor, wall, and mirror installations that require reliable and effective heating without the need for "see-through" transparency.

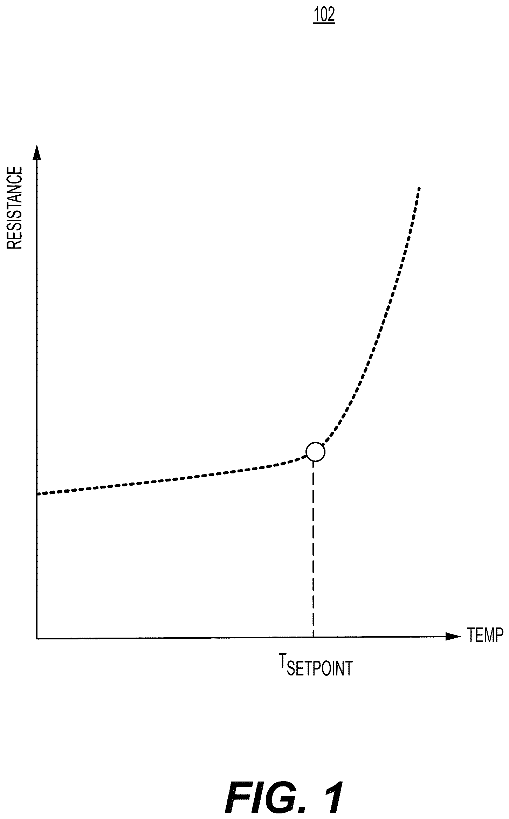

FIG. 1 depicts graph **102** representing the PTC ink electrical resistance characteristics in response to temperature. As shown, the PTC ink variable resistance increases in response to rising temperatures which, at a predetermined high temperature threshold value Tₛₑₜₚₒᵢₙₜ, the electrical resistance increases at an exponential rate.

As will be described in detail below, the present technology is directed to an aircraft structural cabin window assembly that exploits the noted variable electrical resistance properties of PTC inks to provide overheating protection of cabin windows employing a heat-generating THF component to mitigate fogging/frosting issues.

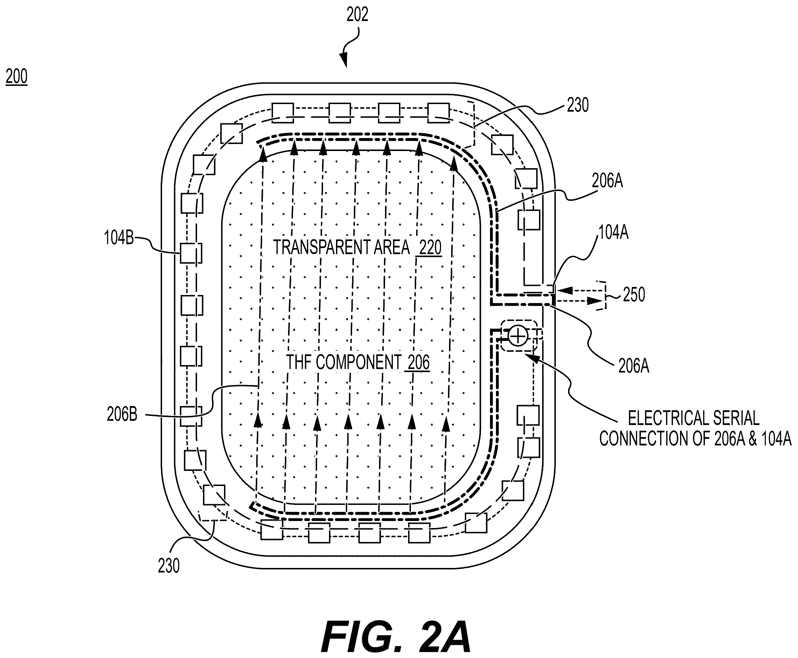

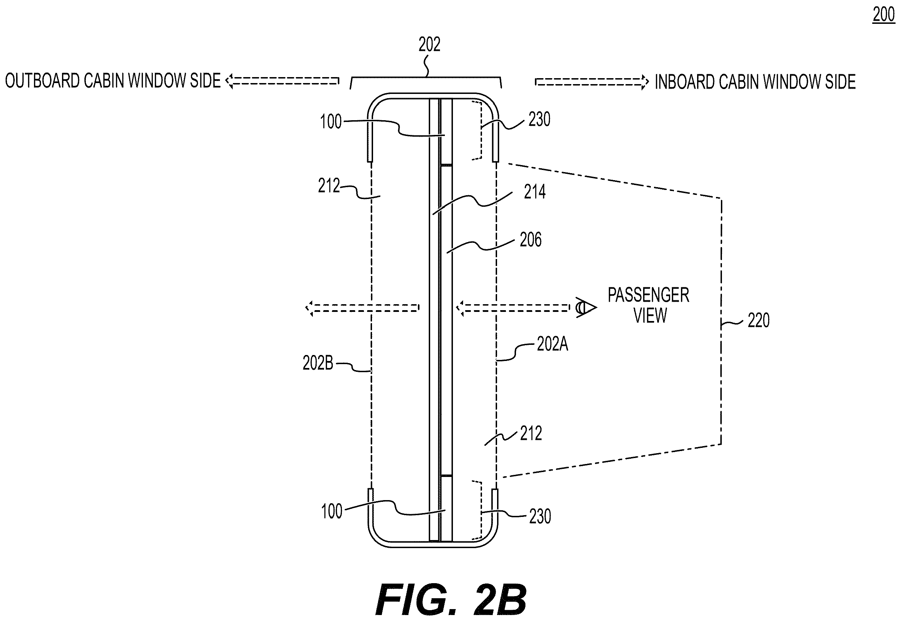

Accordingly, FIG. 2A depicts a front view and FIG. 2B depicts a cross-sectional view of structural cabin window assembly **200** incorporating a PTC ink component **100** and a THF component **206,** in accordance with embodiments of the present technology. It will be appreciated that, unless explicitly identified, the configurations provided by the figures should not be assumed to be to scale, as various features may be exaggerated, scaled down, or even omitted for purposes of clarity.

As best seen in the cross-sectional view of FIG. 2B, structural cabin window assembly **200** comprises a structural cabin window **202** having an upper and lower portions, configured to respectively brace the upper and lower portions structural cabin window **202.** In the depicted nonlimiting embodiment, structural cabin window **202** comprises two transparent, acrylic-based panels **212** that are separated by a transparent interlayer **214** and/or an air gap layer sandwiched therebetween. The structural cabin window **202** manifests an inner surface **202A** disposed inboard towards the aircraft cabin and an outer surface **202B** disposed outboard away from the aircraft cabin. The structural cabin window inner and outer surfaces **202A, 202B** are arranged to be in substantial alignment with each other to provide a transparent "see-through" viewing area **220** that includes THF component **206.**

In turn, structural cabin window **202** includes a non-transparent area **230** that is vertically separated from transparent area **220** and includes PTC ink component **100.** In the depicted nonlimiting embodiment, both of the THF component **206** and PTC ink component **100** are shown to be applied on the inboard facing side of interlayer **214.** However, either one or both of the THF **206,** PTC **100** components may be applied to the outboard facing side of interlayer **214** with equal efficacy.

It will be appreciated that the configuration of structural cabin window assembly **200** described above is not intended to be limiting, as alternative or modified configurations, such as, the inclusion of additional panels, layers, air gaps, *etc.* remain consistent with the principles of the present technology.

Turning to the front view of cabin structural window assembly **200** of FIG. 2A, the THF component **206** is disposed within the transparent viewing area **220.** The THF component **206** comprises transparent heating elements **206B** spatially arranged in parallel at regular intervals that span across the transparent viewing area **220** to generate heat in response to a supplied electrical voltage V_{supply}. The transparent heating elements **206B** are electrically-coupled in parallel to a conductive THF busbar **206A** for receipt of the supplied electrical voltage. The THF busbar **206A** is arranged along the non-transparent area **230** of the window assembly **200** and is electrically connected to an aircraft power source **250** (*not shown*) for receipt of electrical voltage V_{supply}. The voltage V_{supply} supplied by the aircraft power source **250** may comprise an AC nominal voltage of 112-115V or a nominal DC voltage of 5-28V. With this configuration, THF component **206** operates to generate thermal energy to heat the inner and/or outer surfaces **202A, 202B** of cabin window **202** to prevent the occurrence of fogging/frosting events during colder temperatures by maintaining the structural cabin window surfaces temperature above the local dew point.

Returning to FIG. 2A, the PTC ink component **100** is disposed along the non-transparent area **230** of window assembly **200.** The PTC ink component **100** comprises conductive PTC ink tiles **104B** peripherally arranged along the non-transparent area **230.** As shown, the PTC ink tiles **104B** are electrically-coupled in parallel to a conductive PTC busbar **104A** that is also peripherally arranged along the non-transparent area **230.** As also shown, the PTC busbar **104A** is serially-connected to the THF busbar **206A** that is connected to the aircraft power source **250** in order for the PTC busbar **104A** to receive the electrical voltage V_{supply} and supply the same to the PTC ink tiles **104B.**

The PTC ink tiles **104B** are, as noted above, comprise electrically-conductive, non-transparent, carbon-based materials having a variable electrical resistance responsive to sensed temperatures. As such, the PTC ink tiles **104B** operate to generate heat based on a supplied electrical voltage V_{supply} which, in response to ambient temperatures exceeding a high temperature threshold value Tₛₑₜₚₒᵢₙₜ, the tile electrical resistance increases exponentially to substantially limit or reduce the electrical current flowing therethrough.

For proper operations, the configuration of PTC ink component **100** requires consideration of several design factors, such as: (a) PTC high temperature threshold Tₛₑₜₚₒᵢₙₜ; (b) PTC coverage area; (c) PTC resistance ratio; and (d) PTC initial power density.

In particular, the PTC temperature threshold Tₛₑₜₚₒᵢₙₜ is to be properly set to a temperature value in which the PTC variable resistance increases exponentially to avoid overheating. The PTC coverage area is to be configured to span a maximal area, that is, span as large of an area as possible within the dimensional confines of the nontransparent area to effectively reduce heat generation when the PTC temperature threshold Tₛₑₜₚₒᵢₙₜ is reached.

Moreover, the PTC resistance ratio, defined as the maximum PTC resistance at the PTC temperature threshold Tₛₑₜₚₒᵢₙₜ divided by the PTC resistance at lower temperatures (e.g., ≤ 25°C), is to be set to a maximal value, that is, as high a ratio as possible to maximize for overheating protection. Also, the PTC initial power density, defined as the heat generating power divided by the area of the PTC component at cold temperatures, is to be set to sufficiently high enough for effective heat reduction by the PTC component when the PTC temperature threshold Tₛₑₜₚₒᵢₙₜ is reached. However, the PTC initial power density cannot be set too high because it would result in the high resistance ratio of the PTC ink at a colder ambient temperature and prevent the desired heating performance of the THF.

It will be appreciated that the noted PTC design factors have interrelation effects with each other, so the setting of such design factors requires sensitive balancing in order for the of PTC component **100** to function properly during high temperature conditions.

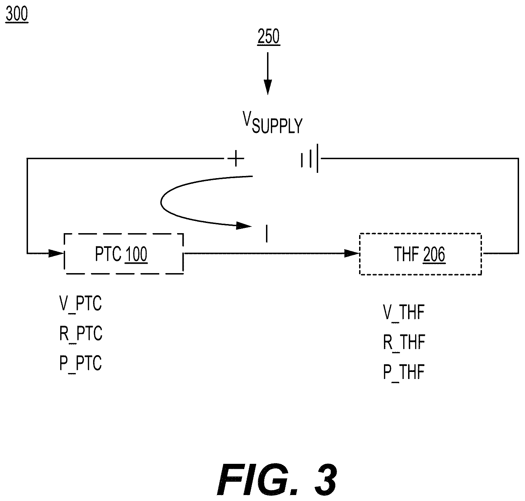

With this said, FIG. 3 depicts a schematic representation of the serial-connection configuration **300** between the PTC component **100** and the THF component **206,** in accordance with embodiments of the present technology. As shown, the serial connection configuration receives the supplied electrical voltage V_{supply} from the aircraft power source **250** which, as noted above, may comprise an AC or DC voltage. Consequently, the supplied electrical voltage V_{supply} generates an electrical current I that flows through the PTC component **100** and the THF component **206.** As a result of the current flow, the PTC component **100** electrical operational values include the PTC component voltage V_PTC, the PTC resistance R_PTC, and the PTC power heat generation P_PTC. Relatedly, the THF component **206** electrical operational values include the THF voltage V_THF, the THF resistance R_THF, and the THF power heat generation P_THF.

Therefore, in normal operations during lower temperature ambient conditions, the structural cabin window assembly **200** functions to activate the heating cycle by energizing the THF transparent heating elements **206B** and the PTC ink tiles **104B** to generate heat P_THF, P_PTC, respectively, and maintain the window surface temperature above the local dew point. As noted above, at lower temperatures, the PTC ink variable electrical resistance R_PTC remains low, enabling sufficient heat generation by the THF component **206** to prevent window fogging/frosting. And, in the event that prevailing conditions result in higher temperatures, the structural cabin window assembly **200** functions to properly deactivate the heating cycle.

Therefore, in the event that the heating cycle is not properly deactivated, the structural cabin window assembly **200** functions in a protection mode to prevent overheating of the cabin window surfaces. The protection mode is automatically triggered upon the PTC ink component **100** being exposed to higher temperatures conditions, in which the PTC variable electrical resistance R_PTC gradually increases in response to rising temperatures, such that if the temperature exceeds beyond the predetermined temperature threshold Tₛₑₜₚₒᵢₙₜ limit, the PTC variable electrical resistance R_PTC increases exponentially to substantially limit or reduce the electrical current I flowing through the serial-connection configuration **300.** In terms of the electrical operational values, the THF resistance R_THF is constant while current I is substantially reduced by virtue of the PTC variable electrical resistance R_PTC exponential increase. As such, the resulting THF power heat generation P_THF value, represented as P_THF = I² x R_THF, is reduced.

Relatedly, based on the proper value settings of the noted PTC 100 design factors, namely, the PTC temperature threshold Tₛₑₜₚₒᵢₙₜ, PTC coverage area, PTC resistance ratio, and PTC initial power density, the PTC power heat generation P_PTC value, represented as P_PTC = I² x R_PTC, is reduced to a level that does not cause overheating of the non-transparent area of the structural window.

In this manner, the disclosed cabin window assembly **200** incorporates a PTC component **100** and a THF component **206** that effectively prevents fogging/frosting issues of cabin window surfaces while providing safe and reliable overheating protection of cabin window surfaces.

It will be appreciated that modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. An aircraft anti-fogging and anti-frosting structural cabin window assembly, comprising:
a structural cabin window containing a transparent viewing area and a non-transparent area;
an electrically conductive transparent heating film (THF) component disposed along the transparent area of the structural cabin window, the THF component configured to generate thermal energy upon being activated due to low temperatures by receiving an electric voltage supplied by an aircraft electrical power source; and
an electrically conductive positive temperature coefficient (PTC) component disposed along the non-transparent area and electrically-connected in series to the THF component for receiving the supplied electrical voltage, the PTC component configured with an electrical resistance that varies with sensed temperatures;
wherein, in response to a temperature exceeding a high temperature threshold value (Tₛₑₜₚₒᵢₙₜ), the electrical resistance of the PTC component increases to a level that reduces electrical current supplied to the THF component to prevent overheating of the structural cabin window by the THF component.

2. The aircraft structural cabin window assembly of claim 1 wherein, upon temperatures exceeding the high temperature threshold value Tₛₑₜₚₒᵢₙₜ, a variable electrical resistance of the PTC component is configured to increase at an exponential rate to minimize the electrical current flowing through the THF and PTC components.

3. The aircraft structural cabin window assembly of any one of claim 1 or claim 2, wherein the THF component further comprises:
a plurality of electrically conductive transparent heating elements arranged to span across the transparent viewing area; and
a conductive THF busbar arranged along the non-transparent area and electrically coupled to the transparent heating elements and the aircraft power source for supplying electrical voltage to the transparent heating elements.

4. The aircraft structural cabin window assembly of claim 3, wherein the PTC component further comprises:
a plurality of electrically conductive PTC tiles arranged along the non-transparent area;
an electrically conductive PTC busbar arranged along the non-transparent area and electrically coupled to the heating elements and electrically serially-connected to the conductive THF busbar for supplying electrical voltage to the PTC tiles.

5. The aircraft structural cabin window assembly of claim 2, wherein the configuration of the PTC component comprises one or more of:
setting the high temperature threshold Tₛₑₜₚₒᵢₙₜ at a value for which the PTC component variable resistance increases exponentially;
setting a PTC component coverage area to span a maximal area of the non-transparent area;
setting a PTC component resistance ratio to a maximal value; and
setting a PTC component initial power density to a maximal value.

6. The aircraft structural cabin window assembly of claim 3, wherein the plurality of transparent heating elements are electrically-coupled to the THF busbar in parallel.

7. The aircraft structural cabin window assembly of claim 4, wherein the plurality of PTC tiles are electrically-coupled to the PTC busbar in parallel.

8. The aircraft structural cabin window assembly of any one of claims 1 to 7, wherein the structural cabin window further comprises:
at least two transparent panels separated by a transparent interlayer interposed between the two panels,
wherein one or both of the THF and PTC components are disposed on the transparent interlayer.

9. The aircraft structural cabin window assembly of any one of claims 1 to 8, wherein the non-transparent area is arranged to peripherally surround the transparent area.

10. The aircraft structural cabin window assembly of any one of claims 1 to 9, wherein the aircraft power source comprises one of an AC voltage source or a DC voltage source.

11. An aircraft comprising the aircraft structural cabin window of any one of claims 1 to 10.
